# EUROPEAN PATENT APPLICATION

(11) **EP 2 230 658 A1**
(43) Date of publication of application: **22.09.2010**
(21) Application number: 08869475.7
(22) Date of filing: 10.09.2008
(51) Int. Cl.: G09F 9/30, G02F 1/1339, G02F 1/1345, G09F 9/00, H01L 29/786

(54) **DISPLAY DEVICE**

(30) Priority: 09.01.2008 JP 2008001820
(71) Applicant: Sharp Kabushiki Kaisha, Osaka-shi, Osaka 545-8522 (JP)
(72) Inventor: FUJIKAWA, Yohsuke, Osaka 545-8522 (JP)
(74) Representative: Goddar, Heinz J.
(86) International application number: PCT/JP2008/002504
(87) International publication number: WO 2009/087706

(57) **Abstract**

A display device (10) includes a first substrate (11) and a second substrate (12) bonded with each other via a frame-like sealing member (13), and a monolithic circuit formed on a surface closer to the second substrate (12) of the first substrate (11) in a region surrounded by the sealing member (13). A TEG (21) is formed on one of the first and second substrates (11, 12), and at least a portion of the TEG (21) is covered with the other of the first and second substrates (11, 12).

## Description

### TECHNICAL FIELD

The present invention relates to display devices.

### BACKGROUND ART

Liquid crystal cells used in liquid crystal display devices have a structure in which a first substrate and a second substrate having different sizes are bonded with each other using a sealing member, with various thin films being provided on surfaces thereof facing each other. Such liquid crystal cells are fabricated by a method of bonding a mother substrate for the first substrate and a mother substrate for the second substrates, and cutting the resultant structure into a number of liquid crystal cells. In view of their handling during fabrication, the mother substrates each have a thickness of about 0.5-0.7 mm.

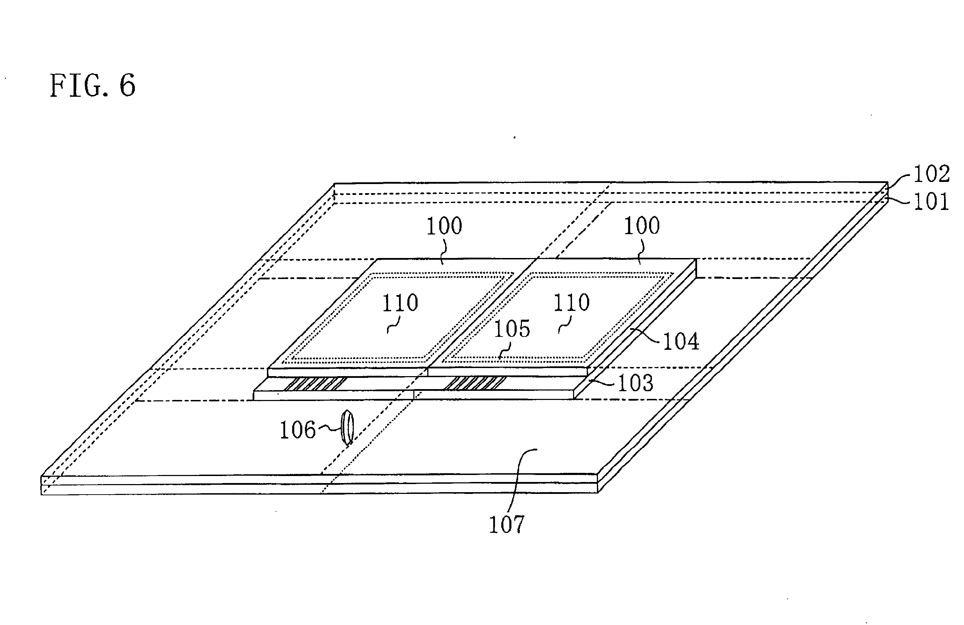

FIG. 6 is a perspective view of such liquid crystal cells 100 just after two mother substrates thereof are bonded together in a fabrication method thereof. First substrates 103 of the liquid crystal cells 100 are provided on a mother substrate 101 for the first substrates 103 by patterning. Typically, the first substrate 103 is a thin film transistor (TFT) substrate. Second substrates 104 of the liquid crystal cell 100 are provided on a mother substrate 102 for the second substrates 104 by patterning. Typically, the second substrate 104 is a color filter (CF) substrate.

In recent years, terminals are often provided at only one side of the liquid crystal cell 100. This structure is sometimes called "three-terminal-free-side structure." Liquid crystal cells 100 described below all have the three-terminal-free-side structure in which terminals are provided at only one side. It is considered that this structure can reduce the number of circuit parts and is therefore advantageous in terms of connection reliability and cost.

The first substrate 103 is fixed to the second substrate 104 via a sealing member 105 so that film surfaces of the two substrates face each other and a predetermined gap is maintained between the two substrates. The sealing member 105 having a line width of about 1 mm is formed at a predetermined position from each of edges at four sides of the liquid crystal cell 100.

Liquid crystal is enclosed in a space (display portion 110 described below) surrounded by the sealing member 105. The liquid crystal is dispensed by a known method, such as the vacuum injection method or the one-drop-fill method. FIG. 6 shows a sealing member for the liquid crystal cell 100 which is formed by the one-drop-fill method. The sealing member is formed in the shape of a closed frame.

The mother substrates 101 and 102 are cleaved into the liquid crystal cells 100 by scribing grooves in outer surfaces of the mother substrates 101 and 102 using the scribe wheel 106 before applying an impact thereto. In this case, the mother substrates 101 and 102 have a waste substrate region 107 which is not used in the devices.

Note that, in the case of the vacuum injection method, an opening is provided in a portion of the frame-like sealing member 105, and liquid crystal is dispensed and loaded through the opening after the mother substrates 101 and 102 are cut into the liquid crystal cells 100.

In the fabrication of the first substrates, a test element group (TEG) is often formed on the mother substrate for the first substrates so that characteristics of thin film transistors or other elements are managed. Examples of the TEG include one for measurement of an electric characteristic, one for measurement of a film thickness, and one for measurement of a patterning accuracy.

The TEG for measurement of an electric characteristic has a test element and a measurement pad as its minimum configuration. The test element and the measurement pad are connected via an interconnection. The TEGs for measurement of a film thickness and a patterning accuracy do not require any measurement pad and therefore may be composed only of a test pattern as a minimum unit.

Note that it is not often that only one TEG having a minimum configuration (referred to hereinafter as a single TEG) is provided, and it is often that a plurality of single TEGs for different purposes are provided.

There are known arrangements of a TEG as described in, for example, Patent Documents 1-4 and the like.
(A) A TEG is provided in a "waste substrate region" which is located on the mother substrate for the first substrates and is not used by any device surrounding the liquid crystal cells.
(B) A TEG is provided on the mother substrate for the first substrates on cleavage lines of the liquid crystal cells (lines generated by cleaving the mother substrate).
(C) Test elements of a TEG are formed on the mother substrate for the first substrates in the liquid crystal-dispensed regions of the liquid crystal cells, and measurement pads are formed in the terminal regions of the liquid crystal cells.
(D) A TEG is provided on the mother substrate for the first substrates in the terminal regions of the liquid crystal cells.

Moreover, Patent Document 2 describes, in FIG. 5, a structure in which a TEG is provided in a liquid crystal cell having a monolithic circuit. However, Patent Document 2 does not describe a position where a terminal is extracted, a position where a substrate corresponding to the second substrate (CF substrate) is cut, or a sealing member.

Moreover, Patent Document 5 describes a method of providing, immediately below a sealing member, a pad (not a TEG) for directly measuring a signal of a monolithic circuit which is formed and exposed outside the sealing member.

### CITATION LIST

### PATENT DOCUMENTS

PATENT DOCUMENT 1: Japanese Patent Laid-Open Publication No. 2005-352419
PATENT DOCUMENT 2: Japanese Patent Laid-Open Publication No. 2002-124554
PATENT DOCUMENT 3: Japanese Patent Laid-Open Publication No. S61-15570
PATENT DOCUMENT 4: Japanese Patent Laid-Open Publication No. 2004-341216
PATENT DOCUMENT 5: Japanese Patent Laid-Open Publication No. H11-133461

### SUMMARY OF THE INVENTION

### TECHNICAL PROBLEM

In recent years, attempts have been actively made to produce high-performance liquid crystal cells in which not only pixel electrodes and interconnections, but also a pixel drive circuit and other functional circuits are monolithically formed in the liquid crystal cell, and some of the high-performance liquid crystal cells are becoming practical. Therefore, there is an increasing importance on TEGs provided on the first substrate (in some cases, the second substrate). It may also be contemplated that a novel element or circuit is provided as a TEG on a mother substrate for existing liquid crystal cells for the purpose of development of future new technologies. The development and manufacture of such a high-performance liquid crystal cell require a great effort and cost. Therefore, it is, if possible, desirable to avoid the situation that the technology is easily analyzed by the third party who tries to catch up.

In view of the above, however, conventional TEG arrangements have the following drawbacks.

### - Case of Configuration (A) -

A waste substrate region which is not used by any device is required to provide a TEG. Therefore, the number of liquid crystal cells obtained from a mother substrate is reduced. Therefore, it is difficult to increase the number of liquid crystal cells obtained from a mother substrate to reduce or prevent an increase in cost.

### - Case of Configuration (B) -

If a TEG is present on a cleavage line, cleavage is not likely to be normally achieved, due to the presence of film stress or uneven topography of a metal film constituting the TEG. If a crack or a burr occurs on an end surface of a liquid crystal cell, the accuracy of assembly may be deteriorated, or the liquid crystal cell may be easily broken from the protrusion of the burr.

### - Case of Configuration (C) -

Test elements of a TEG are present in a region surrounded by the sealing member, and measurement pads of the TEG are present in the terminal region. Therefore, the flexibility of design of interconnections and terminals provided inside the sealing member is reduced. In some cases, the frame region of a liquid crystal cell is increased. Moreover, because the measurement pads are provided in the terminal region, the third party is easily allowed to perform measurement, and therefore, technical information and know-how desired to be concealed is likely to be stolen. Moreover, because the test elements are not covered with the seal member, the cross-sectional structure or the like of the substrate is easily investigated if the substrate is successfully delaminated.

### - Case of Configuration (D) -

Because a TEG is entirely provided in the terminal region, the liquid crystal cell is easily analyzed as in the case of configuration (C). Moreover, when the TEG is large, the flexibility of terminal design is reduced.

Note that, as described in Patent Document 5, in the case of a configuration in which the monolithic circuit itself is exposed on the outside of the sealing member, the circuit itself can be investigated and analyzed without using the test pads covered with the sealing member. Therefore, such a configuration is not suitable for the concealment of technical information.

The present invention has been made in view of the aforementioned problems. It is an object of the present invention to provide a display device which has a TEG which is difficult to analyze.

### SOLUTION TO THE PROBLEM

A display device according to the present invention includes a first substrate and a second substrate bonded with each other via a frame-like sealing member, and a monolithic circuit formed on a surface closer to the second substrate of the first substrate in a region surrounded by the sealing member. A TEG is formed on one of the first and second substrates, and at least a portion of the TEG is covered with the other of the first and second substrates.

With such a configuration, at least a portion of the TEG formed in one of the first and second substrates is covered with the other substrate. Therefore, when the first and second substrates are delaminated from each other to analyze the display device, destruction of the other substrate covering the at least a portion of the TEG leads to damage of the corresponding portion of the TEG, or destruction of the entire TEG. Therefore, it is difficult to analyze the TEG, whereby technical information about the TEG and the like of the display device can be satisfactorily concealed.

Note that the "frame-like sealing member" is not limited to those which have a shape which is completely continuously provided to form a closed space, and includes, for example, those in which there is a cut in a portion thereof so that an opening is provided through which liquid crystal is injected when a liquid crystal cell is formed.

### BRIEF DESCRIPTION OF THE DRAWINGS

FIG. 1 is a plan view of a liquid crystal display device according to a first embodiment.
FIG. 2 is a cross-sectional view of a liquid crystal cell according to the first embodiment.
FIG. 3 is a plan view of a TEG according to the first embodiment.
FIG. 4 is a plan view of a liquid crystal display device according to a second embodiment.
FIG. 5 is a cross-sectional view of a liquid crystal cell according to the second embodiment.
FIG. 6 is a perspective view of mother substrates in a substrate cleaving step.
FIG. 7 is a plan view of a conventional TEG arrangement.

### DESCRIPTION OF EMBODIMENTS

Display devices according to embodiments of the present invention will be described in detail hereinafter with reference to the accompanying drawings. As examples of the display devices, liquid crystal display devices will be described. Note that the present invention is not limited to the embodiments below.

### (First Embodiment)

### <Configuration of Liquid Crystal Display Device 10>

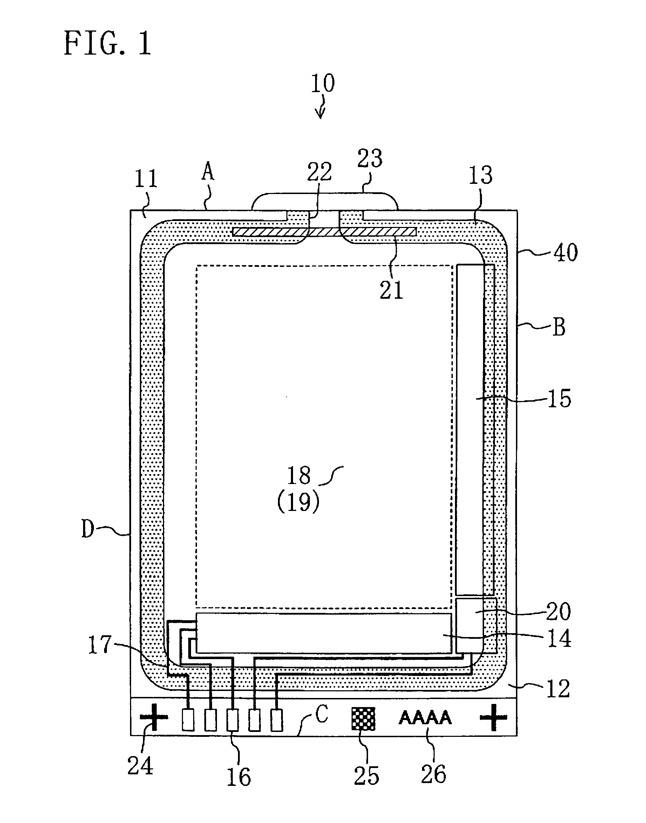

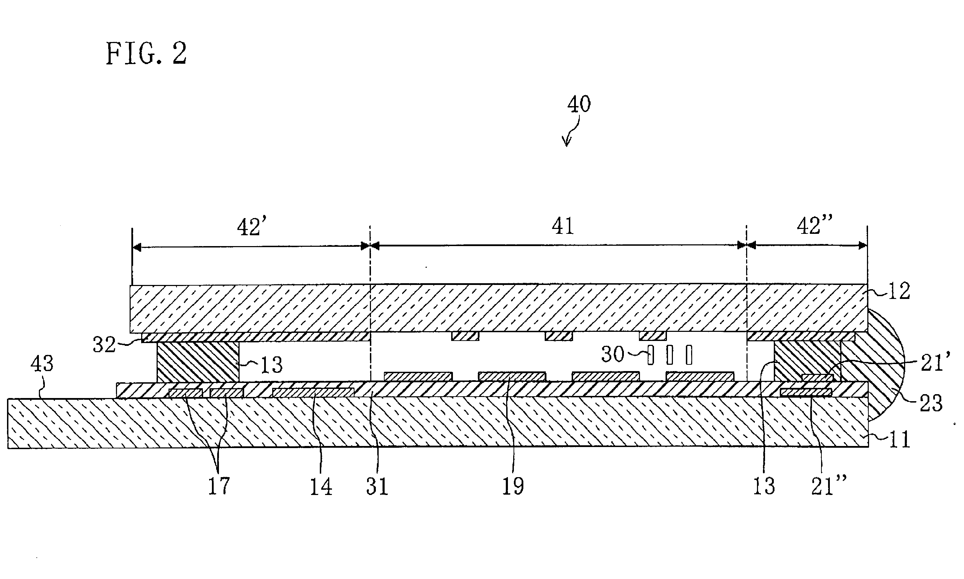

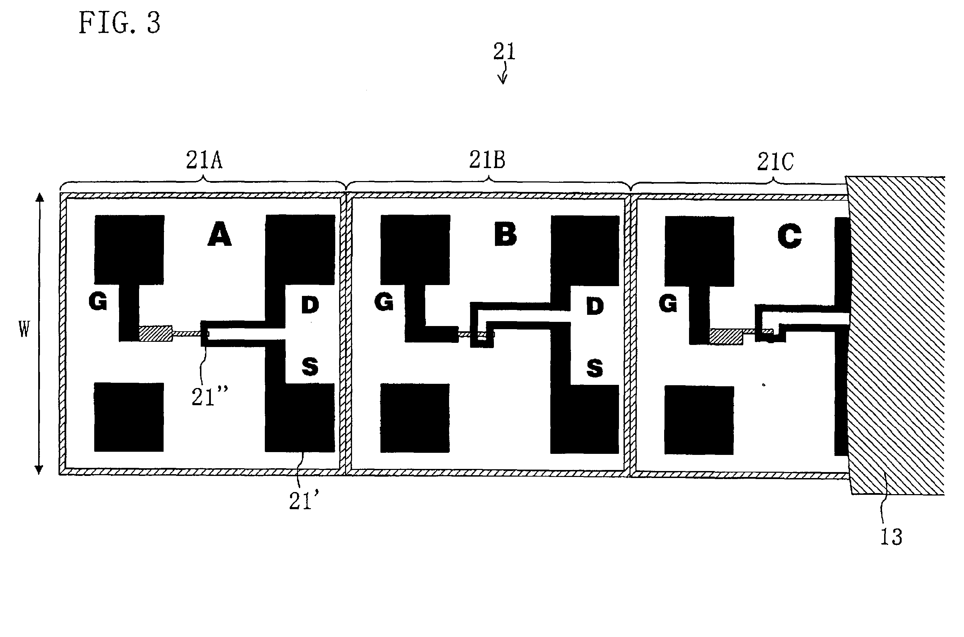

FIG. 1 is a plan view of a liquid crystal display device 10 according to a first embodiment of the present invention. FIG. 2 is a cross-sectional view of a liquid crystal cell 40 of the liquid crystal display device 10. FIG. 3 is a plan view of a TEG 21 and a sealing member 13.

The liquid crystal display device 10 includes the liquid crystal cell 40, a backlight (not shown) facing the liquid crystal cell 40, and the like.

### - Configuration of Liquid Crystal Cell 40 -

The liquid crystal cell 40 has a structure in which a first substrate 11 and a second substrate 12 which are, for example, made of glass having a thickness of 0.7 mm are bonded with each other via a sealing member 13. The sealing member 13 is formed in the shape of a frame. There is a cut at a portion of the frame, i.e., the sealing member 13 has an opening 22 which opens toward a side surface of the liquid crystal cell 40. At the side surface of the liquid crystal cell 40, the opening 22 is sealed using a sealing resin 23, such as an ultraviolet curable resin or the like. As described below, the liquid crystal cell 40 is obtained by cleaving two mother substrates bonded with each other. The four sides (A-D of FIG. 1) of the liquid crystal cell 40 each indicate a cleavage line.

Thin film transistors (TFTs), a source driver circuit 14, a gate driver circuit 15, terminals 16, interconnections 17 connecting the driver circuits 14 and 15 and the terminals 16, and pixel electrodes 19 constituting a display portion 18 are monolithically formed on the first substrate 11 (TFT substrate) by a well-known method. Moreover, circuits 20, such as a power supply circuit, a level shifter, a sensor circuit, and the like, are provided in a frame region so that the packaging density is increased. Moreover, the TEG 21 (test element group) is provided on the first substrate 11 in a region which is covered with the second substrate 12 facing the first substrate 11.

The terminals 16 are provided only in a terminal region 43 located at the side C of the liquid crystal cell 40. The interconnections 17 are extended from the driver circuits to the outside of the liquid crystal cell 40.

The source driver circuit 14, the gate driver circuit 15, and the circuits 20 are formed in respective regions surrounded by the sealing member 13.

The circuits, the interconnections 17, and a test element 21 " of the TEG 21 are covered with an insulating layer 31 made of, for example, an organic resin layer. The organic resin layer serves as a protective layer for the circuits, the interconnections 17, and the like. Note that an uneven topography may be imparted to a surface of the organic resin layer to form an uneven reflective layer capable of scattering light, which is commonly used in reflective type liquid crystal cells or reflective/transmissive type liquid crystal cells.

Here, it is preferable that the organic resin layer be not present in the terminal region 43. This is because, for example, when a flexible printed substrate is mounted on the liquid crystal cell 40, then if a surface of the terminal 16 is scrubbed using a spatula or the like for cleaning, the organic resin layer is disadvantageously delaminated. Note that, if the uneven reflective layer is not required, the insulating layer 31 may be formed of an inorganic film, such as silicon oxide, silicon nitride, or the like.

The first substrate 11 is fixed via the frame-like sealing member 13 to the second substrate 12 (CF substrate) having a light blocking film 32 (black matrix), a color layer (not shown), and a counter electrode (not shown) so that a predetermined gap is maintained therebetween with the electrode surfaces of the two substrates facing each other. The opening 22 is provided in the sealing member 13 at the side A so that the inside of the sealing member 13 is filled with a liquid crystal material 30 by the vacuum injection method.

In this embodiment, the adhesive strength between the substrate (first substrate 11) on which the TEG is formed and the sealing member 13 is caused to be almost equal to or greater than the adhesive strength between the counter substrate (second substrate 12) and the sealing member 13. Therefore, when the liquid crystal cell is disassembled, residue of the sealing member is left on the TEG.

The adhesive strength of the sealing member 13 is reduced when a resin film is provided between the sealing member 13 and the substrate. For example, when the underlying material of the sealing member 13 is the light blocking film 32 made of a metal, or the glass base, the adhesive force increases. On the other hand, the underlying material of the sealing member 13 is a resin, the adhesive force decreases. Therefore, by using a resin black matrix as the light blocking film 32 and causing the light blocking film 32 to occupy a large portion of the underlying material below the adhesive region of the sealing member 13, the adhesive strength between the sealing member 13 and the second substrate 12 can be caused to be almost equal to or less than the adhesive strength between the sealing member 13 and the first substrate 11.

When the resin light blocking film 32 is provided in most of the adhesive region of the sealing member 13, there are the following advantages. When the insulating layer 31 provided on the first substrate 11 is an organic resin layer, the probability that the sealing member 13 is left on the second substrate 12 when the liquid crystal cell is disassembled is about 1/2. Moreover, when the insulating layer 31 provided on the first substrate 11 is an inorganic film or a glass material, the sealing member 13 is more easily left on the first substrate 11 having a stronger adhesive force, resulting in residue of the sealing member 13 which interferes with analysis of the TEG.

### - Configuration of TEG 21-

The TEG 21 is for the purpose of evaluation of an electric characteristic, and includes a measurement pad 21', a test element 21 ", and an interconnection, which constitute a minimum configuration. The measurement pad 21' is provided on an outermost layer of the TEG 21, and is covered with the sealing member 13. Therefore, when an organic resin layer is provided, it is necessary to provide an opening in the organic resin layer so that the interconnection of the test element 21 " provided below the organic resin layer is electrically connected to the measurement pad 21' provided above the organic resin layer. Alternatively, when measurement is completed before application of the organic resin layer, the measurement pad 21' may be provided below the organic resin layer.

Examples of the test element 21" include a thin film transistor, a thin film diode, a capacitor, and a resistor which are primarily made of a thin metal film, and a monolithic circuit which is a combination thereof. The TEG 21 may have a structure in which a plurality of single TEGs are arranged. Note that the plurality of single TEGs may be identical, or may include different single TEGs (a single TEG 21 A, a single TEG 2 1 B, and a single TEG 21C shown in FIG. 3). The plurality of single TEGs may also include a single TEG or a symbol which is used for a purpose other than evaluation of an electric characteristic. The test element 21" as well as the measurement pad 21' may be covered with the sealing member 13.

Note that an identification mark, such as A, B, C, or the like, or a symbol indicating the type of the measurement pad 21' may be formed for each single TEG. The single TEGs of FIG. 3 are each a thin film transistor, and symbols for the gate (G), the source (S), and the drain (D) are provided in the vicinity of the measurement pad 21' by patterning. The measurement pad 21' is formed in a position common to the single TEGs so that measurement is easily performed. Note that an extra measurement pad 21' may be provided.

Of frame regions at the four sides of the liquid crystal cell 40, a frame region in which the circuits, the interconnections 17, and the like are concentrated is referred to as a first frame region 42', and a frame region on the opposite side of a display region 41 with respect to the first frame region 42' is referred to as a second frame region 42". In the second frame region 42", the circuits, the interconnections 17, and the like are not concentrated. The TEG 21 is provided substantially immediately below the sealing member 13 in the second frame region 42". In FIG. 1, the TEG 21 is provided immediately below the sealing member 13 at the side A.

In the liquid crystal cell 40 having a three-terminal-free-side structure including a monolithic circuit, the interconnections 17 to the source driver or an RGB switch circuit and a driver IC described below are provided at a terminal side (side C). Therefore, the second frame region 42" in which the circuits and the interconnections 17 are not concentrated is easily provided at an end side (side A) facing the terminal side (side C) with the display region 41 being interposed between the two sides. Moreover, the end side (side A) opposite to the terminal side (side C) is located at a distance from the terminals 16, and no important circuit is provided at the end side (side A) in view of interconnect resistance, and therefore, there is sufficient space for the TEG 21. In FIG. 1, the gate driver circuit 15 is provided at the right side (side B). If the number of scanning lines is large, a gate driver may be provided at each of the left and right sides. Therefore, the region (second frame region 42") at the end side (side A) opposite to the terminal side (side C) is most suitable as a region where the TEG 21 is provided.

The TEG 21 is formed in the shape of a rectangle extending in a long-side direction of the sealing member 13. The short side of the TEG 21 has a dimension (W) which is smaller than a line width of the sealing member 13. For example, when the line width of the sealing member 13 is 1 mm, W is about 0.5 mm. The TEG 21 is provided along a direction in which the sealing member 13 extends, and is covered with the sealing member 13. Here, the TEG 21 is assumed to include single TEGs having a rectangular region with one side having a length of at least about 0.5 mm, which are arranged in a line. In this case, the width (short side) of the TEG 21 can be reduced the most, and therefore, the TEG 21 can be satisfactorily covered with the sealing member 13. Note that the shape of the TEG 21 is not limited to the shape of a straight line. For example, when the TEG 21 is provided at a corner portion of the liquid crystal cell 40, the TEG 21 may be in substantially an L shape. In this case, the test element 21 " and the measurement pad 21' constituting the TEG 21 can all be covered with the sealing member 13.

The TEG 21 is located apart from the side A, which is a cleavage line, on the first substrate 11.

Because the TEG 21 is provided in a region surrounded by the sealing member 13, there is an excess portion of the terminal region 43. In the excess portion, positioning marks 24 for mounting, and identification means required for management of fabrication (an optically readable mark 25, such as a two-dimensional bar code or the like, a part number 26, such as an alphanumeric code or the like, which can be read by humans, etc.) are provided.

Such identification means is expected to serve as means for tracing a production lot or the like. However, in the case of the conventional TEG arrangement in which the TEG 21, which is not required after distribution on the market, occupies the terminal region 43, it is difficult to provide marks and the like in the terminal region 43.

Although the TEG 21 is provided at the side A in this embodiment, the portion where the TEG 21 is provided is not limited to this. For example, the TEG 21 may be provided immediately below the sealing member 13 at the side D under conditions where the TEG 21 does not interfere with the circuits or the interconnections 17.

Any alignment mode is applicable to the liquid crystal material 30. When a rubbing-less alignment mode, e.g., a VA mode, is used, it is possible to perfectly avoid nonuniform transcription of a pattern of the TEG 21 during rubbing.

### <Method for Fabricating Liquid Crystal Display Device 10>

Next, a method for fabricating the liquid crystal display device 10 will be described.

Initially, the mother substrate for the second substrates 12 on which pixels, a light blocking film, a counter electrode, and the like are formed is prepared. Next, the mother substrate for the first substrates 11 on which TFT devices, pixel electrodes, and the like are formed is prepared, and a plurality of spacers for determining the cell thickness are formed via a photography step. Note that the spacers may be formed on the mother substrate for the second substrates 12, or may be provided by a method of spraying spherical spacers.

Next, the sealing member 13 is applied to either the mother substrate for the first substrates 11 or the mother substrate for the second substrates 12. The application is performed so that there is a cut in a portion of the sealing member 13. Next, the mother substrate for the first substrates 11 and the mother substrate for the second substrates 12 are bonded with each other via the sealing member 13.

Next, the large-size bonded substrates which are formed by bonding the mother substrates is cut into the liquid crystal cells 40 using a scribe wheel.

In this case, portions excluding the liquid crystal cells 40 of the mother substrates are waste substrate regions. Moreover, in this case, because there is a cut in a portion of the sealing member 13 when the mother substrates are bonded with each other, the opening 22 is formed in a side surface of the liquid crystal cell 40.

Next, the liquid crystal material 30 is prepared in a liquid crystal dish or the like. The liquid crystal cell 40 is dipped into the liquid crystal while the opening 22 in the side surface faces the liquid crystal dish. Thereafter, the liquid crystal material 30 is vacuum-injected into the liquid crystal cell 40. Next, the opening 22 in the side surface of the liquid crystal cell 40 is sealed with the sealing resin 23.

Next, an optical film is attached to an outermost surface of the liquid crystal cell 40. Examples of the optical film include a polarizing plate, a retarder plate, an antireflective film, a protective film, and the like. Next, a backlight is prepared, and is placed on a side closer to the first substrate 11 of the liquid crystal cell 40. The liquid crystal display device 10 is thus fabricated.

### <Operation and Advantages of First Embodiment>

In the liquid crystal display device 10, the test element 21 " and the measurement pad 21' of the TEG 21 are covered with the second substrate 12. Therefore, if the liquid crystal cell 40 is possessed by the third party after being shipped as a product, the liquid crystal cell 40 cannot be electrically measured directly. Moreover, because the measurement pad 21' is covered with the sealing member 13, even if a substrate is delaminated, residue of the sealing member 13 makes it difficult to perform electrical measurement.

Moreover, the test element 21" is covered with the sealing member 13. Therefore, even if the liquid crystal cell 40 is disassembled and the second substrate 12 is delaminated to investigate the liquid crystal cell 40 in detail (e.g., to observe a cross-section thereof), residue of the sealing member 13 remains, the thin film constituting a single TEG is delaminated along with the sealing member 13, or a single TEG itself is damaged. Therefore, it is difficult for the third party to investigate the product.

Moreover, the TEG 21 is formed in the shape of a rectangle extending in the long-side direction of the sealing member 13 and having a short side whose dimension (W) is smaller than the line width of the sealing member 13. Therefore, the TEG 21 can be provided without increasing the frame region of the liquid crystal cell 40. Moreover, because the entire TEG 21 can be covered with the sealing member 13, destruction of the TEG 21 can be caused to accompany the delamination of the sealing member 13 to disassemble the liquid crystal cell 40.

Moreover, because the TEG 21 is not provided on the mother substrate 101 or 102 in the waste substrate region 107, a dimension of a waste substrate between each liquid crystal cell can be reduced to a small value, most preferably zero. Therefore, the number of the liquid crystal cells 40 per mother substrate can be increased, i.e., the high-performance liquid crystal cell 40 can be fabricated with lower cost.

Moreover, the TEG 21 is located apart from the cleavage line of the liquid crystal cell 40, whereby cleavage failure can be reduced. Therefore, a reduction in the yield of the liquid crystal cell 40 can be reduced.

### (Second Embodiment)

### <Configuration of Liquid Crystal Display Device 60>

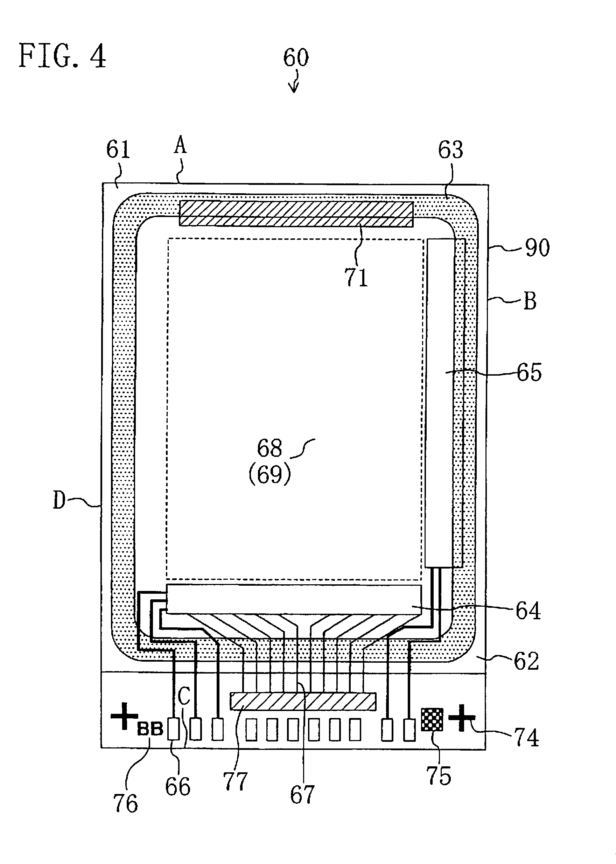

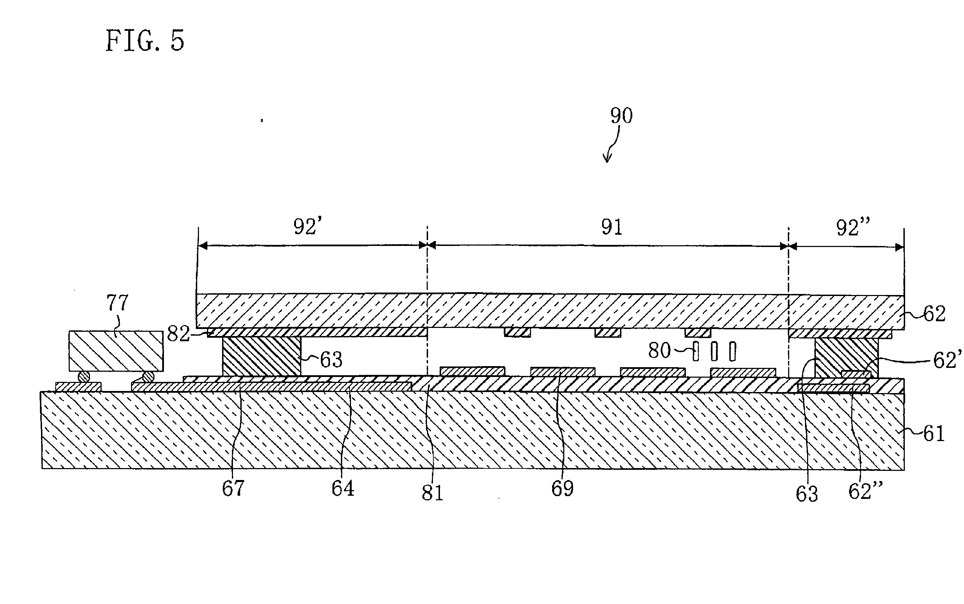

FIG. 4 is a plan view of a liquid crystal display device 60 according to a second embodiment of the present invention. FIG. 5 is a cross-sectional view of a liquid crystal cell 90 of the liquid crystal display device 60.

The liquid crystal display device 60 includes the liquid crystal cell 90, a backlight (not shown) facing the liquid crystal cell 90, and the like.

For example, the liquid crystal cell 90 has a structure in which a first substrate 61 (TFT substrate) made of glass having a thickness of 0.3 mm and a second substrate 62 made of glass having a thickness of 0.1 mm are bonded with each other via a frame-like sealing member 63. Thus, the thickness of each substrate is clearly smaller than the thickness (0.5-0.7 mm) of mother glass for flat panel displays which are commonly available on the market.

Thin film transistors, an RGB switch circuit 64, a gate driver circuit 65, a driver IC 77, terminals 66, and interconnections 67 connecting the circuits 64, 65, and 77 and the terminals 66 are monolithically formed along with pixel electrodes 69 which are formed on an insulating layer 81 of the first substrate 61 and constitute a display portion 68 on a surface of the first substrate 61, by a well-known method. Note that circuits, such as a power supply circuit, a level shifter, a sensor circuit, and the like, may be provided in an excess portion of a frame region so that the packaging density is increased. A drive method of using the driver IC 77 and the RGB switch circuit 64 in combination as in this embodiment can advantageously achieve lower power consumption, and, in recent years, has been preferably employed.

The terminals 66 are provided only at a side C of the liquid crystal cell 90. The interconnections 67 are extended from the gate driver circuit 65 and the driver IC 77 to the outside of the liquid crystal cell 90.

The RGB switch circuit 64, the gate driver circuit 65, or the circuits, such as the power supply circuit and the like, are formed in a region surrounded by the frame-like sealing member 63.

In this embodiment, the terminal region is occupied by the driver IC 77, the interconnections 67, and the like, and therefore, the flexibility which allows a TEG 71 to be provided is low. Moreover, an insulating film made of an organic resin layer is not provided in the terminal region, and therefore, the TEG 71 cannot be formed in the terminal region. Even if the TEG 71 can be provided in the terminal region, positioning marks 74 for mounting, and identification means (an optically readable mark 75 such as a two-dimensional bar code or the like, and a part number 76 such as an alphanumeric code or the like which can be read by humans) required for management of fabrication are provided, with priority, in the excess portion of the terminal region. Therefore, there is an even smaller room for the TEG 71. Therefore, in this embodiment, the TEG 71 is provided in a second frame region 92" including a smaller number of circuits and interconnections, which is provided at an end portion on the opposite side of a display region 91 with respect to a first frame region 92' in which the interconnections 67 to the RGB switch circuit 64 or the external driver IC 77 are formed. The TEG 71 is formed in the shape of a rectangle extending in a long-side direction of the sealing member 63. The TEG 71 is provided below the sealing member 63, extending in a direction in the sealing member 63 extends. Note that the shape of the TEG 71 is not limited to the shape of a straight line. For example, when the TEG 71 is provided at a corner portion of the liquid crystal cell 90, the TEG 71 may be in substantially an L shape. In this case, a test element 62" and a measurement pad 61' constituting the TEG 71 can all be covered with the sealing member 63.

The TEG 71 is located apart from a side A which is a cleavage line, on the first substrate 61.

The first substrate 61 is fixed via the frame-like sealing member 63 to the second substrate 62 (CF substrate) having a light blocking film 82 (black matrix), a color layer (not shown), and a counter electrode (not shown) so that a predetermined gap is maintained therebetween with the electrode surfaces of the two substrates facing each other with. The sealing member 63 has no opening. The inside of the sealing member 63 is filled with a liquid crystal material 80 by the so-called one-drop-fill method.

### <Method for Fabricating Liquid Crystal Display Device 60>

The liquid crystal display device 60 may be fabricated as follows. Initially, the mother substrate for the first substrates 61 is prepared. The frame-like sealing member 63 is provided on a surface of the mother substrate for the first substrates 61. Next, the liquid crystal material 80 is dropped inside the sealing member 63. Thereafter, the mother substrate for the second substrates 62 separately prepared is bonded with the mother substrate for the first substrates 61. Alternatively, the sealing member 63 may be provided on the mother substrate for the second substrates 62, the liquid crystal material 80 may be dropped, and the mother substrate for the first substrates 61 may be bonded with the mother substrate for the second substrates 62.

The thicknesses of the first substrates 61 and the second substrates 62 thus bonded with each other are reduced by etching or polishing. Because the thickness of the bonded substrates is reduced before the bonded substrates are cut into liquid crystal cells, this method is more efficient than when the thickness of the bonded substrates is reduced after the bonded substrates are cut into liquid crystal cells. Moreover, when this method is employed, the substrate thickness is large in the steps prior to the bonding step, i.e., until various thin films are formed on the substrate surface by patterning to form the TEG, and therefore, it is easy to handle the substrates during conveyance of the substrates or measurement of the TEG.

When the first and second substrates 61 and 62 are simultaneously subjected to the process of reducing the thickness, the first and second substrates 61 and 62 will have the same thicknesses. Alternatively, the first and second substrates 61 and 62 are separately subjected to the process of reducing the thickness, the first and second substrates 61 and 62 will have different thicknesses. When the first substrate 61 having a larger thickness (e.g., 0.7 mm) and the second substrate 62 having a smaller thickness (e.g., 0.5 mm) are bonded with each other before the first and second substrates 61 and 62 are simultaneously subjected to the process of reducing the thickness, the overall thickness of the liquid crystal cell can be reduced while the original difference in thickness (0.2 mm) can be maintained.

Next, the bonded substrates are cut into the liquid crystal cells 90 using a scribe wheel or the like. Next, the aforementioned optical film is attached to the outermost surface of the liquid crystal cell 90. Thereafter, the backlight is prepared and provided on a side closer to the first substrate 61 of the liquid crystal cell 90. The liquid crystal display device 60 is thus fabricated.

### <Operation and Advantages of Second Embodiment>

In the liquid crystal display device 60, none of the four sides of the liquid crystal cell 90 have a cut, i.e., the sealing member 63 continuously extends along the end portions at the four sides of the liquid crystal cell 90. Therefore, when the TEG 71 is provided at any of the four sides of the liquid crystal cell 90, the TEG 71 can be covered with the sealing member 63. Therefore, the flexibility of design is improved. Moreover, destruction of the TEG 71 is more likely to accompany the delamination of the sealing member 63 to disassemble the liquid crystal cell 90. Moreover, it is more difficult to expose the TEG 71 while allowing the TEG 71 to be measured.

Moreover, because the thicknesses of the first and second substrates 61 and 62 are reduced by etching or polishing, the substrates are easy to fracture when the liquid crystal cell 90 is disassembled. Therefore, it is difficult to delaminate the substrates without damaging the TEG 71, and therefore, it is difficult for the third party to analyze the TEG 71. Here, one of the first and second substrates 61 and 62 on which the driver IC 77 is provided may be caused to have a larger thickness than that of the other rather than causing the first and second substrates 61 and 62 to have the same thickness. When at least one of the first and second substrates 61 and 62 is processed to have a small thickness, the substrates preferably fracture when the liquid crystal cell 90 is disassembled (delamination of the optical film, or cutting of the substrates). Note that, when the substrates are easy to fracture, i.e., the TEG 71 is easily destroyed during the disassembly, the TEG 71 may be slightly extended off from immediately below the sealing member 63. Moreover, when an acrylic resin separately prepared as a protective member is attached to the display surface of the liquid crystal cell 90 via a transparent adhesive rather than attaching the protective film directly to the display surface of the liquid crystal cell 90, the substrates, i.e., the TEG easily fractures when the protective member and the liquid crystal cell 90 are delaminated from each other. Moreover, when an external touch panel is attached to the display surface of the liquid crystal cell 90 in place of the protective member, the substrates, i.e., the TEG also easily factures.

The burr or crack which occurs during cleavage of the substrates becomes significant when the substrate thickness is small and the metal film is present on a cleavage line. In spite of this, such a drawback can be reduced or avoided because the TEG 71 is located apart from the cleavage line of the substrates of the liquid crystal cell 90.

Moreover, the TEG 71 is provided in the second frame region 92" which is located at an end portion on the opposite side of the liquid crystal cell 90 with respect to the first frame region 92' in which the interconnections 67 to the monolithic RGB switch circuit 64 or the external driver IC 77 are formed, and in which a smaller number of circuits and interconnections 67 are provided. Therefore, the TEG 71 can be provided using a compact region, i.e., without increasing the frame region of the liquid crystal cell 90.

Although the present invention has been illustrated in the first and second embodiments, changes can be made to the aforementioned configurations without departing the spirit and scope of the present invention. When there is no monolithic circuit to be analyzed, e.g., when a liquid crystal cell including a thin film diode or a simple matrix liquid crystal cell is employed, the present invention is applicable as means for concealing a TEG.

Moreover, the display device of the present invention is not limited to display devices related to liquid crystal displays (LCDs), such as those described in the first and second embodiments, and may be a display device related to plasma displays (PDs), plasma addressed liquid crystal displays (PALCs), organic electroluminescences (organic ELs), inorganic electroluminescences (inorganic ELs), field emission displays (FEDs), surface-conduction electron-emitter displays (SEDs), or the like.

### (Examples)

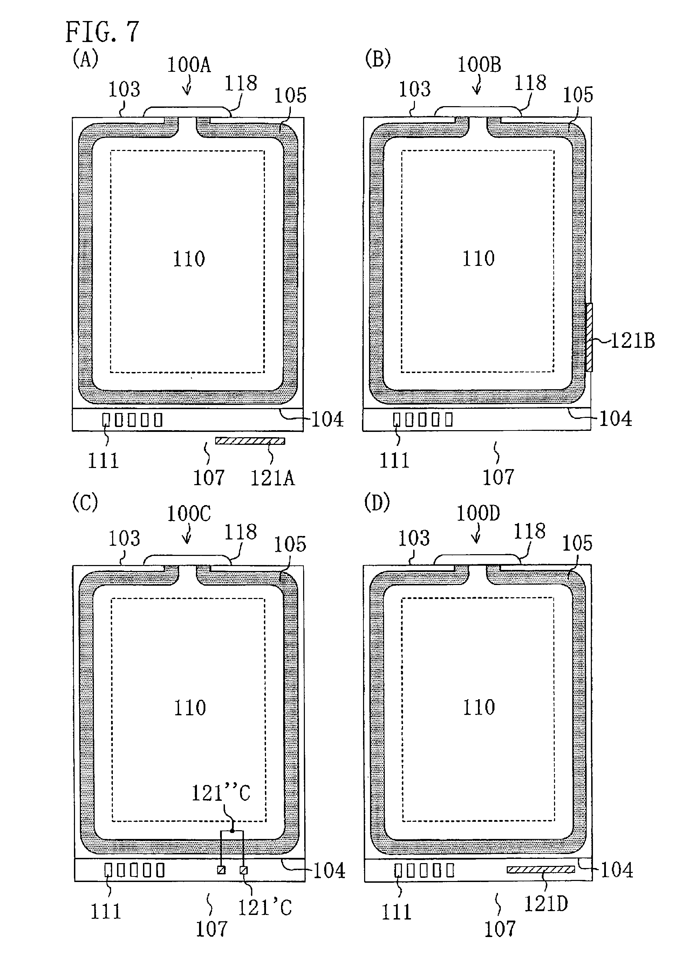

Liquid crystal cells having the configuration of the first or second embodiment (examples of the present invention) and liquid crystal cells having conventionally known TEG arrangements (comparative examples) were studied and compared in terms of operation and advantage. As the liquid crystal cells having conventionally known TEG arrangements, liquid crystal cells 100A-100D shown in FIG. 7 were employed.

The liquid crystal cells 100A-100D each have a configuration in which a first substrate 103 including terminals in a frame region thereof and a second substrate 104 are bonded with each other via a frame-like sealing member 105. The frame-like sealing member 105 surrounds a display portion 110. In each of the liquid crystal cells 100A-100D, there is a cut in a portion of the frame-like sealing member 105 to provide an opening, and a sealing resin 118 seals the opening from a side surface of the liquid crystal cell. The liquid crystal cells 100A-100D include TEGs 121A-121D, respectively, which have different positions or shapes.

The TEG 121A of the liquid crystal cell 100A has a rectangular outline and is provided in a waste substrate region 107. The TEG 121 B of the liquid crystal cell 100B has a rectangular outline and is provided on a cleavage line. In the TEG 121C of the liquid crystal cell 100C, a measurement pad 121'C and a test element 121"C in a frame region are located apart from each other with the sealing member 105 being interposed therebetween. The TEG 121 D of the liquid crystal cell 100D has a rectangular outline and is provided in a frame region in which terminals 111 are formed.

As to the operation and advantages, it was studied whether the avoidance of the third party's analysis is good (○ ) or not (×), whether the cleavage performance of the substrates is good (○ ) or not (×), whether the number of liquid crystal cells obtained form the mother substrates is large (○ ) or not (×), and whether the flexibility of terminal design is high (○ ) or not (×).

The results of the comparison are shown in Table 1. In Table 1, the conventionally known TEG arrangements (comparative examples) include an arrangement A indicating the liquid crystal cell 100A of FIG. 7(A), an arrangement B indicating the liquid crystal cell 100B of FIG. 7(B), an arrangement C indicating the liquid crystal cell 100C of FIG. 7(C), and an arrangement D indicating the liquid crystal cell 100D of FIG. 7(D).

**Table 1**

| | Known TEG Arrangements (Comparative Examples) | | | | Examples |
|---|---|---|---|---|---|
| | Arrangement A | Arrangement B | Arrangement C | Arrangement D | |
| Avoidance of Third Party's Analysis | ○ | ○ | × | × | ○ |
| Cleavage Performance | ○ | × | ○ | ○ | ○ |
| Number of Liquid Crystal Cells | × | ○ | ○ | ○ | ○ |
| Flexibility of Terminal Design | ○ | ○ | △ -× | × | ○ |

As shown in Table 1, there was a problem with the liquid crystal cell 100A that the number of the liquid crystal cells 100A obtained from the mother substrates was small because the TEG 121A is provided in the waste substrate region 107. There was a problem with the liquid crystal cell 100B that the cleavage performance of the substrates was poor because the TEG 121B was provided on a cleavage line. There was a problem with the liquid crystal cell 100C that the third party's analysis was not avoided and the flexibility of terminal design was not good, because the measurement pad 121'C and the test element 121"C of the TEG 121C were located apart from each other with the sealing member 105 being interposed therebetween. There was a problem with the liquid crystal cell 100D that the third party's analysis was not avoided and the flexibility of terminal design was not good, because the TEG 121D was provided in the frame region in which the terminals were formed.

In contrast to this, the liquid crystal cells of the first and second embodiments both exhibited good results in terms of the aforementioned items.

### INDUSTRIAL APPLICABILITY

As described above, the present invention is useful for display devices.

## Claims

1. A display device comprising:
a first substrate and a second substrate bonded with each other via a frame-like sealing member; and
a monolithic circuit formed on a surface closer to the second substrate of the first substrate in a region surrounded by the sealing member,
wherein
a TEG is formed on one of the first and second substrates, and at least a portion of the TEG is covered with the other of the first and second substrates.

2. The display device of claim 1, wherein
the portion of the TEG covered with the other of the first and second substrates is a measurement pad.

3. The display device of claim 2, wherein
the measurement pad is covered with the sealing member.

4. The display device of claim 1, wherein
the portion of the TEG covered with the other of the first and second substrates is a test element, and the test element is covered with the sealing member.

5. The display device of claim 1, wherein
the TEG is formed in the shape of a rectangle extending in a long-side direction of the sealing member,
the TEG has a width smaller than that of the sealing member, and
the TEG is covered with the sealing member.

6. The display device of any of claims 1-5, wherein
the first substrate is formed by cleaving a mother substrate, and
the TEG is located apart from a cleavage line on the first substrate.

7. The display device of any of claims 1-6, wherein
at least one of the first and second substrates is subjected to a process of reducing a thickness thereof.

8. The display device of any of claims 1-7, wherein
a first frame region in which interconnections to a monolithic driver portion or an external driver portion are formed is provided at one end portion of the first or second substrate,
a second frame region is provided at an end portion opposite to the first frame region of the first or second substrate, and
the TEG is formed in the second frame region.

9. The display device of any of claims 1-8, wherein
an adhesive strength between the one of the first and second substrates on which the TEG is formed and the sealing member is almost equal to or greater than an adhesive strength between the other substrate and the sealing member.
